Europäisches Patentamt

(19) European Patent Office

Office européen des brevets

(11) Numéro de publication: **0 067 745**
**A1**

## (12) DEMANDE DE BREVET EUROPEEN

(21) Numéro de dépôt: **82400964.1**

(22) Date de dépôt: **25.05.82**

(51) Int. Cl.³: **A 23 C 1/04**
**A 23 C 1/12**

(30) Priorité: **29.05.81 FR 8110739**

(43) Date de publication de la demande:
**22.12.82 Bulletin 82/51**

(84) Etats contractants désignés:
**AT BE CH DE GB IT LI LU NL SE**

(71) Demandeur: **LAGUILHARRE S.A.**
**2, avenue du 18 Juin 1940**
**F-92500 Rueil Malmaison(FR)**

(72) Inventeur: **Ciboit, Jacques Jean**
**164 bis, rue de l'Université**
**F-75007 Paris(FR)**

(74) Mandataire: **Kedinger, Jean-Paul et al,**
**c/o Cabinet Malemont 42, avenue du Président Wilson**
**F-75116 Paris(FR)**

(54) Procédé de concentration d'un produit liquide froid, tel qu'un produit laitier froid, avec préchauffage simultané d'un fluide autre que ledit produit liquide.

(57) a) Procédé de concentration d'un produit liquide froid, tel qu'un produit laitier froid, et de préchauffage simultané d'un fluide (29) autre que le produit liquide à concentrer, tel que de l'air, qui consiste à soumettre ledit produit liquide froid à au moins deux opérations d'évaporation successives (I, II), la vapeur nécessaire à chaque opération d'évaporation étant produite par compression (18, 23) de tout ou partie de la vapeur créée par cette même opération d'évaporation, et à utiliser de la vapeur et/ou des condensats produits au cours de l'une (I) au moins des opérations d'évaporation (I, II) pour préchauffer (28) ledit fluide.

b) Ce procédé se caractérise en ce que tout ou partie des condensats (31) obtenus après utilisation de la vapeur et/ou des condensats pour préchauffer le fluide, éventuellement mélangés à tout ou partie des condensats restant provenant des opérations d'évaporation successives et à tout ou partie des buées condensées provenant de la dernière opération d'évaporation, sont mis en oeuvre pour réchauffer (32) le produit liquide froid à concentrer (33).

c) Intéresse notamment l'industrie du lait.

./...

La présente invention concerne un procédé de concentration d'un produit liquide froid, tel qu'un produit laitier froid, et de préchauffage simultané d'un fluide autre que le produit liquide à concentrer, tel que de l'air, qui consiste à soumettre ledit produit liquide froid à au moins deux opérations d'évaporation successives, la vapeur nécessaire à chaque opération d'évaporation étant produite par compression de tout ou partie de la vapeur créée par cette même opération d'évaporation, et à utiliser de la vapeur et/ou des condensats produits au cours de l'une au moins des opérations d'évaporation pour préchauffer ledit fluide.

Pour préchauffer un fluide froid, il est en effet particulièrement avantageux d'utiliser des calories, sous forme de vapeur et/ou de condensats, prélevées à un niveau quelconque des opérations d'évaporation, puisque ces calories qui ont déjà servi à évaporer sont économiques. Toutefois, bien que les condensats obtenus après utilisation de ladite vapeur et/ou desdits condensats pour préchauffer le fluide, renferment encore de la chaleur latente, ceux-ci n'ont pas été exploités dans les procédés connus à ce jour et il en résulte une pure et simple perte de calories.

La présente invention se propose donc, dans le cadre des économies d'énergie, de donner une application immédiate à ces condensats sur le lieu même de leur production. Plus précisément, selon la présente invention tout ou partie des condensats obtenus après utilisation de la vapeur et/ou des condensats pour préchauffer le fluide, éventuellement mélangés à tout ou partie des condensats restant provenant des opérations d'évaporation successives et à tout ou partie des buées condensées provenant de la dernière opération d'évaporation, sont mis en oeuvre pour réchauffer le produit liquide froid à concenter.

Il est à noter que la vapeur nécessaire à chaque opération d'évaporation est produite par compression mécanique ou par thermocompression de la vapeur créée par cette même opération d'évaporation ou encore en combinant la compression mécanique et la thermocompression.

Enfin, l'une au moins des opérations d'évaporation est du type à multiple effet.

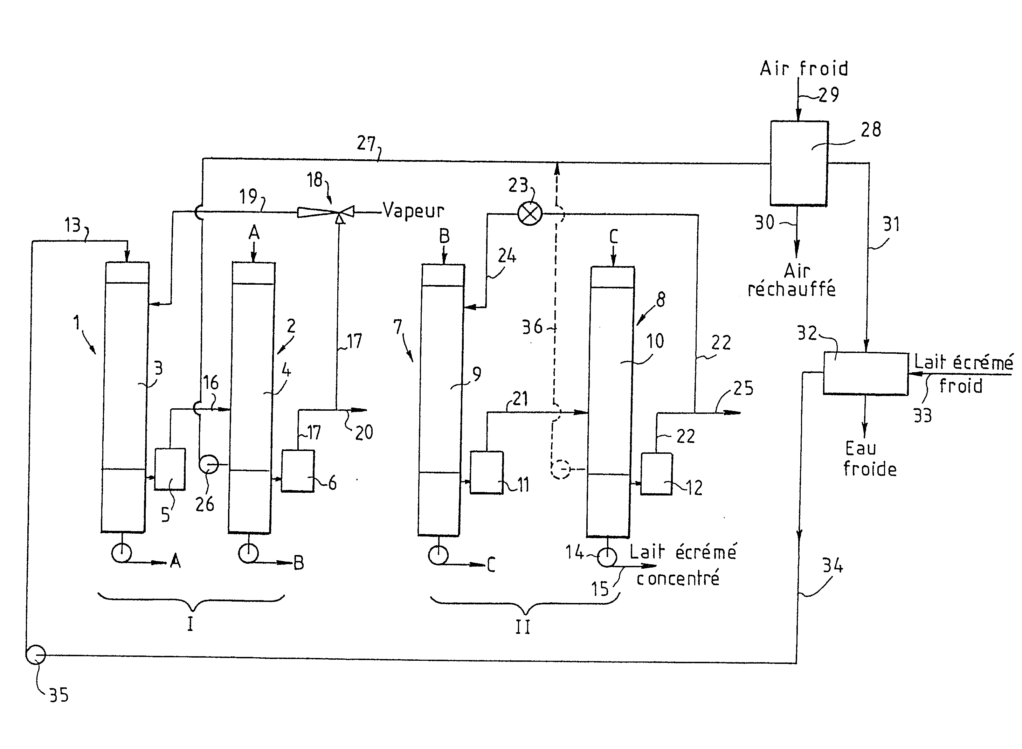

Un mode de réalisation de la présente invention est représenté à titre d'exemple sur le dessin annexé dont la figure unique est une vue schématique d'une installation permettant la mise en oeuvre du procédé selon l'invention.

Cette installation comporte deux groupes d'évaporateurs I,II disposésen série sur le circuitdu produit à concentrer. Plus précisément, le groupe I est constitué de deux corps d'évaporation à flot tombant 1, 2 comprenant chacun un corps de chauffe 3, 4, un séparateur vapeur-liquide 5, 6 étant associé à chacun des corps d'évaporation 1, 2. De même, le groupe II est constitué de deux corps d'évaporation à flot tombant 7, 8 comprenant chacun un corps de chauffe 9, 10, un séparateur vapeur-liquide 11, 12 étant associé à chacun desdits corps d'évaporation 7, 8. Il est à noter par ailleurs que la température des corps de chauffe est décroissante dans l'ordre 3, 4, 9, 10. Le produit à concentrer qui est du lait écrémé, est introduit par la conduite 13 au sommet du corps d'évaporation 1, puis amené de la base de ce dernier en tête A du corps d'évaporation 2, puis de la base de ce dernier en tête B du corps d'évaporation 7 et enfin de la base de ce dernier en tête C du corps d'évaporation 8. Le lait écrémé subit donc de ce fait des concentrations successives dans les différents corps d'évaporation qu'il traverse ; le lait ainsi concentré est ensuite soutiré à la base du corps d'évaporation 8 par une pompe 14 et une conduite 15 et amené à son lieu d'utilisation. Par ailleurs, la vapeur créée par l'évaporation du lait dans le corps d'évaporation 1 est amenée, après passage dans le séparateur vapeur-liquide 5, dans le corps de chauffe 4 du corps d'évaporation 2 par une conduite 16. Quant à la vapeur créée par l'évaporation du lait dans le corps d'évaporation 2, elle est amenée en tout ou partie, après passage dans le séparateur vapeur-liquide 6, par une conduite 17 à l'aspiration d'un thermocompresseur de vapeur 18, dont le refoulement 19 aboutit dans le corps de chauffe 3, la conduite 17 portant en dérivation une conduite 20 reliée à une source de vide (non représentée) éventuellement combiné à un condenseur.

De la même manière, la vapeur créée par l'évaporation du lait dans le corps d'évaporation 7 est amenée, après passage dans le séparateur vapeur-liquide 11, dans le corps de chauffe 10 par une conduite 21 et la vapeur créée par l'évaporation du lait dans le corps d'évaporation 8 est amenée en tout ou partie, après passage dans le séparateur vapeur-liquide 12, par une conduite 22 à l'aspiration d'un compresseur mécanique de vapeur 23 dont le refoulement 24 débouche dans le corps de chauffe 9, la conduite 22 portant en dérivation une conduite 25 reliée à une source de vide éventuellement associée à un condenseur (non représentés).

Les condensats formés dans le corps de chauffe 4 sont soutirés par une pompe 26 et une conduite 27 et amenés dans un échangeur de chaleur indirect 28 où ils réchauffent de l'air froid entrant dans ce dernier par une conduite 29 et en sortant, réchauffé, par une conduite 30. Les condensats, moins chauds, issus de l'échangeur 28 sont ensuite dirigés par une conduite 31 dans un second échangeur de chaleur indirect 32 où, conformément à l'invention, ils cèdent leurs calories à du lait froid écrémé, ce dernier entrant dans ledit échangeur 32 par une conduite 33 et en sortant réchauffé par une conduite 34 reliée par l'intermédiaire d'une pompe 35 à la conduite 13. **0067745**

Il est bien entendu possible d'apporter à l'installation qui vient d'être décrite, de multiples modifications sans pour autant sortir du cadre de l'invention.

Ainsi, on pourrait mettre en oeuvre plus de deux groupes d'évaporateurs, la seule condition étant que la vapeur nécessaire au fonctionnement de chacun des groupes soit constitué par la vapeur d'évaporation créée dans ce même groupe. Par ailleurs, les groupes d'évaporateurs I et II représentées sont du type à double effet, mais ils pourraient être l'un et/ou l'autre à simple effet ou encore comporter plus de deux effets.

D'autre part, au lieu de prélever les condensats sur le groupe I, on pourrait les prélever sur le groupe II (conduite 36) ou encore simultanément sur les deux groupes.

En lieu et place du thermocompresseur de vapeur 18 on pourrait utiliser un compresseur mécanique de vapeur et en lieu et place du compresseur mécanique 23, on pourrait utiliser un thermocompresseur de vapeur.

De même, au lieu de prélever des condensats sur les groupes I et/ ou II, on pourrait prélever de la vapeur à un niveau quelconque de ces groupes. Une autre variante consisterait encore à prélever de la vapeur sur l'un des groupes et des condensats sur l'autre ou de prélever de la vapeur et des condensats sur un même groupe.

4

REVENDICATIONS                    **0067745**

1. Procédé de concentration d'un produit liquide froid, tel qu'un produit laitier froid, et de préchauffage simultané d'un fluide autre que le produit liquide à concentrer, tel que de l'air, qui consiste à soumettre ledit produit liquide froid à au moins deux opérations d'évaporation successives, la vapeur nécessaire à chaque opération d'évaporation étant produite par compression de tout ou partie de la vapeur créée par cette même opération d'évaporation, et à utiliser de la vapeur et/ou des condensats produits au cours de l'une au moins des opérations d'évaporation pour préchauffer ledit fluide, caractérisé en ce que tout ou partie des condensats obtenus après utilisation de la vapeur et/ou des condensats pour préchauffer le fluide, éventuellement mélangés à tout ou partie des condensats restant provenant des opérations d'évaporation successives et à tout ou partie des buées condensées provenant de la dernière opération d'évaporation, sont mis en oeuvre pour réchauffer le produit liquide froid à concentrer.

2. Procédé selon la revendication 1, caractérisé en ce que la vapeur nécessaire à chaque opération d'évaporation est produite par compression mécanique et/ou thermocompression de la vapeur créée par cette même opération d'évaporation.

3. Procédé selon la revendication 1 ou 2, caractérisé en ce que l'une au moins des opérations d'évaporation est du type à multiple effet.

Air froid 29 — 28 — 31 — Lait écrémé froid 33

30 — Air réchauffé

Eau froide — 32 — 34

27 — Vapeur — 18 — 19 — 17 — 20 — 17 — 6 — A — 2 — 4 — B — 26 — 16 — 5 — A — 3 — 13 — 1

23 — 24 — B — 9 — 7 — 11 — C — 21 — 36 — 8 — 10 — C — 22 — 22 — 25 — 12

Lait écrémé concentré — 14 — 15 — II — I — 35

Office européen
des brevets

**RAPPORT DE RECHERCHE EUROPEENNE**

**0067745**

Numéro de la demande

EP 82 40 0964

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 433 963 (LAGUILHARRE) *Revendications 1-14; figure 1; page 3, ligne 20 et suivantes* | 1-3 | A 23 C 1/04 A 23 C 1/12 |
| Y | FR-A-2 460 696 (LAGUILHARRE) *Revendications 1,2,8; page 3, ligne 5 et suivantes; figure 1* | 1-3 | |
| Y | FR-A-2 462 180 (LAGUILHARRE) *Revendications 1-8; page 3, lignes 4-39; page 4, lignes 1-14* | 1-3 | |

| DOMAINES TECHNIQUES RECHERCHES (Int. Cl. ³) |
|---|
| A 23 C A 23 P |

Le présent rapport de recherche a été établi pour toutes les revendications

| Lieu de la recherche LA HAYE | Date d'achèvement de la recherche 06-09-1982 | Examinateur PEETERS J.C. |
|---|---|---|

OEB Form 1503. 03.82